# FASCICULE DE BREVET EUROPEEN

(11) **EP 3 551 442 B1**
(45) Date de publication et mention de la délivrance du brevet: **19.08.2020**
(21) Numéro de dépôt: 17804926.8
(22) Date de dépôt: 04.12.2017
(51) Int. Cl.: B29D 30/06, F16B 1/00

(54) **ELÉMENT DE MOULE POUR MOULE DE PNEUMATIQUE COMPRENANT UN INSERT AMOVIBLE**
FORMELEMENT FÜR EINE REIFENFORM MIT ENTFERNBAREM EINSATZ
MOULD ELEMENT FOR TYRE MOULD COMPRISING A REMOVABLE INSERT

(30) Priorité: 06.12.2016 FR 1661994
(43) Date de publication de la demande: 16.10.2019
(73) Titulaire: Compagnie Générale des Etablissements Michelin, 63000 Clermont-Ferrand (FR)
(72) Inventeur: ROUYET, François, 63040 CLERMONT-FERRAND CEDEX 09 (FR)
(74) Mandataire: Roussy, Delphine
(86) Numéro de dépôt international: PCT/EP2017/081354
(87) Numéro de publication internationale: WO 2018/104219

(56) Documents cités:
- EP-A1- 2 977 624
- DE-A1-102010 017 251
- US-A- 3 400 743
- US-A- 4 547 139
- US-A1- 2005 013 891
- US-A1- 2011 097 137
- US-B2- 6 942 476

## Description

La présente invention concerne les domaines des moules de cuisson ou vulcanisation pour pneumatiques de véhicules.

Plus particulièrement, l'invention concerne un élément de moule comprenant un insert amovible.

Un moule comprend principalement deux coquilles latérales assurant chacune le moulage d'un des flancs latéraux du pneumatique, et une couronne assurant le moulage de la bande de roulement dudit pneumatique. Les coquilles et la couronne définissent un espace intérieur de moulage toroïdal destiné à être mis en contact avec l'ébauche du pneumatique non vulcanisée.

Pour mouler des informations sur un flanc de pneumatique, il est connu d'utiliser des inserts qui sont fixés sur la coquille dédiée du moule. Les inserts comprennent des marquages qui correspondent au négatif du motif à mouler sur le flanc qui peut par exemple être des informations techniques, légales ou permettant aux consommateurs de distinguer la marque du pneumatique, ou encore des codes à barres pour identification de stock, un numéro de série individuel dudit pneumatique, etc.

La fixation d'inserts amovibles sur les coquilles des moules de vulcanisation de pneus utilisant des moyens différents, est bien connue. Par exemple, selon le document US 4547139 A on utilise un mécanisme de verrouillage qui comprend un coulisseau se déplaçant sous l'action d'un ressort ; dans le domaine du "blow moulding", le document US 2005/0013891-A utilise aussi un mécanisme de verrouillage (qui comprend un coulisseau se déplaçant sous l'action d'un ressort) pour faciliter le remplacement des éléments de moulage. Pour fixer des inserts sur la coquille associée du moule, une solution consiste à utiliser des aimants venant se monter dans des logements formés sur la face de moulage de la coquille. Lorsque les aimants sont positionnés à l'intérieur des logements, le moule est chauffé localement de sorte que le matériau du moule se dilate autour de ces logements. Ceci participe au maintien en position des inserts. Pour plus de détail sur une telle fixation par aimants, on pourra par exemple se référer au brevet US 6, 942, 476 (Goodyear).

Pour immobiliser les inserts sans laisser de marques sur le flanc du pneumatique moulé, il est également connu d'utiliser des vis qui viennent se serrer dans des perçages ménagés sur les bords longitudinaux extérieurs des inserts comme cela est décrit dans la demande de brevet DE 10 2010 017 251 (Continental).

Après plusieurs moulages de pneumatiques, le démontage des inserts est généralement nécessaire pour assurer un nettoyage des marquages. En effet, des résidus de gomme peuvent venir recouvrir certaines parties de ces marquages.

Ceci est par exemple le cas pour les marquages de type « velours » destinés à mouler des motifs faisant contraste avec le flanc du pneumatique. En effet, ce type de marquage comprend une pluralité d'éléments en protubérance et en creux par rapport à la face de moulage de l'insert.

Or, après plusieurs moulages, des résidus de gomme peuvent venir se loger dans les creux de tels marquages. Ceci nécessite un nettoyage des inserts hors du moule.

Par ailleurs, il est également nécessaire de pouvoir démonter les inserts pour pouvoir en monter d'autres selon les types de motifs à mouler sur les pneumatiques.

Les solutions conventionnelles utilisées pour la fixation des inserts dans le moule ne sont pas satisfaisantes. En effet, dans le cas d'une fixation par aimants, il est généralement nécessaire de laisser refroidir le moule et les inserts avant de pouvoir les retirer. Par ailleurs, la tenue des aimants dans le moule n'est pas toujours satisfaisante.

Avec une immobilisation par vissage permettant de ne pas laisser de marques sur le flanc du pneumatique moulé comme indiqué précédemment, il convient de démonter le moule de la presse pour avoir accès aux vis, et ensuite de procéder au dévissage ce qui est fastidieux. Ensuite, une fois que l'insert a été nettoyé ou remplacé, il faut alors à nouveau installer et aligner le moule à l'intérieur de la presse.

On comprend donc qu'il existe un besoin pour améliorer la tenue de la fixation des inserts dans un moule et pour limiter le temps nécessaire à leur démontage du moule.

La présente invention concerne un élément de moule pour moule de pneumatique du type comprenant une bande de roulement et deux flancs latéraux.

L'élément de moule selon la revendication 1 comprend un corps pourvu d'une face de moulage apte à mouler toute ou partie d'un des flancs latéraux ou de la bande de roulement du pneumatique, au moins une rainure formée sur la face de moulage, au moins un insert logé dans ladite rainure, et au moins un moyen de fixation apte à fixer de manière amovible ledit insert au corps. L'insert est pourvu d'une face de moulage interne comprenant des moyens de marquage aptes à mouler un motif sur le pneumatique, d'une face d'appui externe et de bords longitudinaux reliant lesdites faces.

Ledit moyen de fixation comprend un organe de retenue qui est monté sur le corps et logé au moins en partie à l'intérieur d'un évidement formé sur la face d'appui dudit insert.

Selon une caractéristique générale de l'organe de retenue, celui-ci comprend des pattes d'encliquetage déformables élastiquement et coopérant avec ledit insert pour assurer la fixation dudit insert sur l'organe de retenue. Des ouvertures d'accès sont formées sur les bords longitudinaux dudit insert et débouchent dans l'évidement en regard des pattes d'encliquetage de l'organe de retenue.

Selon une autre caractéristique générale de l'organe de retenue, celui-ci est monté mobile relativement au corps entre une position de moulage dans laquelle la face de moulage dudit insert prolonge localement la face de moulage du corps, et une position de démontage dans laquelle ledit insert s'étend au moins en partie en saillie par rapport à ladite face de moulage du corps pour laisser dégager les ouvertures d'accès.

Par « pneumatique », on entend tous les types de bandages élastiques soumis ou non à une pression interne.

On entend par « bande de roulement » d'un pneumatique, une quantité de matériau caoutchoutique délimitée par deux surfaces latérales et par deux surfaces principales dont l'une est destinée à entrer en contact avec une chaussée lorsque le pneumatique roule.

Par « flanc » d'un pneumatique, on entend une surface latérale du pneumatique disposée entre la bande de roulement et un bourrelet de ce dernier.

Par « face de moulage » du corps, ou de l'insert, on entend la face interne du corps, ou de l'insert, délimitant en partie l'espace intérieur de moulage toroïdal.

Grâce à l'invention, il est possible de démonter le ou les inserts de manière particulièrement simple et rapide en accédant du côté de l'espace intérieur de moulage sans qu'il soit nécessaire de démonter d'autres parties du moule.

En effet, pour procéder au démontage d'un insert, il suffit de le déplacer vers la position de démontage dans laquelle les ouvertures d'accès sont libres, puis d'introduire un outil de désencliquetage à l'intérieur de ces ouvertures d'accès de sorte à déformer les pattes d'encliquetage pour désolidariser l'insert de l'organe de retenue. L'insert peut ensuite être retiré et nettoyé hors du moule, ou encore être remplacé.

En outre, le montage de l'insert sur le corps de l'élément de moule peut également être réalisé rapidement par simple poussée axiale grâce au caractère déformable élastique des pattes d'encliquetage. Le montage de l'insert peut être réalisé manuellement sans l'aide d'outil.

Les pattes d'encliquetage assurent une solidarisation stable de l'insert sur l'organe de retenue, et donc une bonne tenue de l'insert lors des moulages successifs de pneumatiques. De préférence, les pattes d'encliquetage sont conformées de sorte à pouvoir exercer une force de retenue supérieure à la force d'extraction d'un pneumatique hors du moule. On limite ainsi le risque de séparation non souhaitée de l'insert et de l'organe de retenue lorsque le pneumatique est extrait du moule. Lors du démoulage du pneumatique, l'insert peut légèrement sortir en dehors de la rainure associée mais sans désolidarisation de l'organe de retenue.

Par ailleurs, dans la position de moulage, les ouvertures d'accès ménagées sur les bords longitudinaux de l'insert sont situées à l'intérieur de la rainure du corps de l'élément de moule. Dès lors, ces ouvertures étant recouvertes par le corps, elles ne sont pas susceptibles de laisser des traces de moulage sur le pneumatique.

De préférence, les pattes d'encliquetage de l'organe de retenue coopèrent avec des rainures qui sont formées sur les bords longitudinaux dudit insert et qui débouchent dans l'évidement. Cette solution est avantageuse dans la mesure où l'insert peut ainsi être facilement fabriqué. En variante, il est cependant envisageable de prévoir une coopération des pattes d'encliquetage de l'organe de retenue avec les flancs délimitant l'évidement de l'insert, en prévoyant par exemple sur les pattes et les flancs des parties en conjugaison de forme aptes à s'accrocher l'une sur l'autre.

Dans un mode de réalisation particulier, les ouvertures d'accès s'étendent en partie sur les flancs des rainures. Alternativement, il est possible de prévoir que les rainures forment aussi les ouvertures d'accès dudit insert. Dans ce cas, les rainures assurent une double fonction, à savoir permettre l'accrochage des pattes d'encliquetage de l'organe de retenue et permettre un accès à l'outil de désencliquetage.

Avantageusement, pour obtenir la fixation ou solidarisation de l'insert et de l'organe de retenue, les pattes d'encliquetage de ce dernier comprennent chacune un crochet coopérant par contact avec ledit insert.

Dans un mode de réalisation, l'organe de retenue comprend une embase pour le montage sur un support mobile par rapport au corps, les pattes d'encliquetage étant supportées par l'embase.

Avantageusement, l'organe de retenue est réalisé en une seule pièce. L'organe de retenue peut par exemple être fabriqué à moindre coût à partir d'un flanc de tôle par découpe, emboutissage et pliage. Alternativement, l'organe de retenue peut être réalisé par moulage d'une matière synthétique.

Dans un mode de réalisation particulier, ledit moyen de fixation peut comprendre en outre un support de l'organe de retenue monté coulissant relativement au corps. Dans une variante de réalisation, le support peut s'étendre à l'intérieur d'un logement qui est délimité par un bossage formé sur le fond de la rainure et qui débouche sur une face d'appui du corps opposée à la face de moulage. De préférence, l'organe de retenue vient en appui contre le bossage dans la position de moulage. Ceci favorise une bonne stabilité de l'insert.

Dans un mode de réalisation particulier, ledit moyen de fixation comprend en outre un organe de rappel élastique de l'organe de retenue vers la position de moulage. Ainsi, dès que les pattes d'encliquetage de l'organe de retenue ne sont plus engagées avec l'insert, l'organe de rappel ramène alors automatiquement l'organe de retenue dans sa position initiale à l'intérieur de la rainure.

A titre d'exemple, l'organe de rappel élastique peut comprendre un ressort hélicoïdal ou encore une ou plusieurs rondelles élastiques empilées, par exemple du type Belleville.

Dans la variante de réalisation selon laquelle ledit moyen de fixation comprend en outre le support de l'organe de retenue monté coulissant relativement au corps, l'organe de rappel élastique peut être monté autour de ce support. Dans une autre variante de réalisation, l'organe de rappel élastique peut former lui-même un support mobile par rapport au corps. Dans ce cas, une extrémité de l'organe de rappel peut être fixée au fond de la rainure du corps et l'autre extrémité de l'organe de rappel est fixée sur l'organe de retenue, par exemple sur l'embase.

Les moyens de marquage dudit insert peuvent être aptes à mouler un motif faisant contraste avec le reste du pneumatique de type « velours ». Dans un mode de réalisation particulier, les moyens de marquage sont aptes à mouler un motif comprenant au moins un symbole matriciel codé faisant contraste avec le reste du pneumatique.

L'invention concerne également un moule pour pneumatique selon la revendication 15 comprenant une couronne destinée à assurer le moulage de la bande de roulement du pneumatique, et des coquilles destinées à assurer chacune le moulage d'un des flancs latéraux du pneumatique, au moins l'une de la couronne et des coquilles comprenant un élément de moule tel que défini précédemment.

L'invention concerne encore un procédé de démontage de l'insert d'un élément de moule tel que défini précédemment selon la revendication 16, le procédé comprenant les étapes suivantes :
- déplacer l'insert de la position de moulage à la position de démontage dans laquelle les ouvertures d'accès dudit insert sont dégagées, et
- introduire un outil à l'intérieur des ouvertures d'accès et appuyer avec cet outil sur les pattes d'encliquetage de l'organe de retenue pour les déformer vers l'intérieur de l'insert de sorte à désolidariser l'insert de l'organe de retenue.

Dans un mode de mise en œuvre particulier, l'étape de déplacement de l'insert est réalisée en appliquant au moins un aimant contre la face de moulage de l'insert.

La présente invention sera mieux comprise à la lecture de la description détaillée d'un mode de réalisation pris à titre d'exemple nullement limitatif et illustré par les dessins annexés sur lesquels :
- la figure 1 est une demi-vue en coupe d'un moule pour pneumatique selon un exemple de réalisation de l'invention,
- la figure 2 est une vue en perspective du corps d'une coquille du moule de la figure 1,
- les figures 3 et 4 sont des vues en perspective d'un insert de ladite coquille,
- la figure 5 est une vue de détail de l'insert des figures 3 et 4,
- la figure 6 est une demi-vue en coupe de la coquille équipée d'un moyen de fixation pour la retenue de l'insert,
- la figure 7 est une vue en perspective du moyen de fixation de la figure 6,
- les figures 8 à 10 sont des demi-vues en coupe illustrant le montage de l'insert sur le corps de la coquille, et
- les figures 11 à 17 sont des demi-vues en coupe illustrant le démontage de l'insert du corps de la coquille.

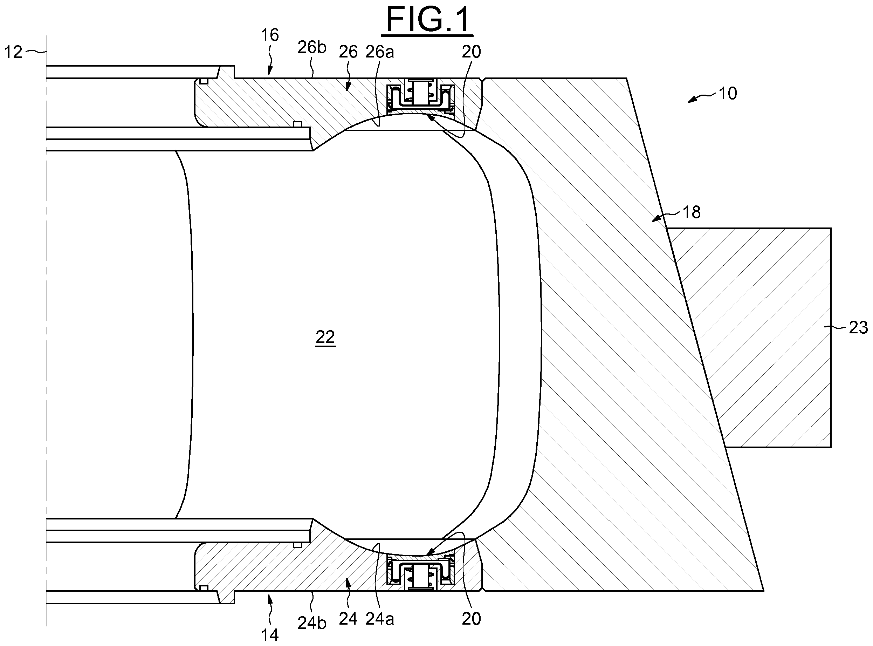

Sur la figure 1, on a représenté un exemple de réalisation d'un moule, référencé 10 dans son ensemble, prévu pour la cuisson ou vulcanisation d'un pneumatique. Le moule 10 présente un axe 12 de symétrie, supposé ici vertical, qui coïncide avec l'axe de révolution du pneumatique.

Le moule 10 comprend deux coquilles 14, 16 annulaires inférieure et supérieure axialement en regard, et une couronne de secteurs 18 entourant radialement les coquilles 14, 16.

Comme cela sera décrit plus en détail par la suite, les coquilles 14, 16 du moule comprennent des inserts 20 fixés de manière amovible et comprenant des moyens de marquage pour mouler un motif sur les flancs latéraux du pneumatique.

De manière connue en soi, les secteurs 18 du moule sont mobiles radialement entre une position de fermeture du moule 10 illustré à la figure 1 qui correspond à la position de moulage du pneumatique, et une position d'ouverture. Dans la position de fermeture, les coquilles 14, 16 et la pluralité de secteurs 18 délimitent conjointement une empreinte 22 du pneumatique. Le moule 10 comprend également une couronne 23 de serrage qui est reliée aux secteurs 18 de sorte qu'un mouvement axial de ladite couronne provoque le déplacement radial des secteurs 18.

Chaque coquille 14, 16 comprend un corps 24, 26 principal pourvu d'une face de moulage 24a, 26a interne annulaire. Les faces de moulage 24a, 26a sont axialement en regard. Le corps 24, 26 comprend également une face d'appui 24b, 26b externe annulaire opposée destinée à être montée contre un plateau (non représenté) du moule. La face d'appui 24b, 26b de chaque coquille est axialement opposée à la face de moulage 24a, 26a. Chaque secteur 18 comprend également une face de moulage 18a intérieure pour assurer le moulage de la bande de roulement du pneumatique.

Dans la description de l'exemple de réalisation, les termes « interne » et « externe » sont utilisés pour définir une orientation selon la direction radiale tandis que les termes « intérieur » et « extérieur » sont utilisés pour définir une orientation selon la direction axiale.

Les coquilles 14, 16 du moule étant identiques dans cet exemple de réalisation, on décrira ici uniquement l'une d'entre elles.

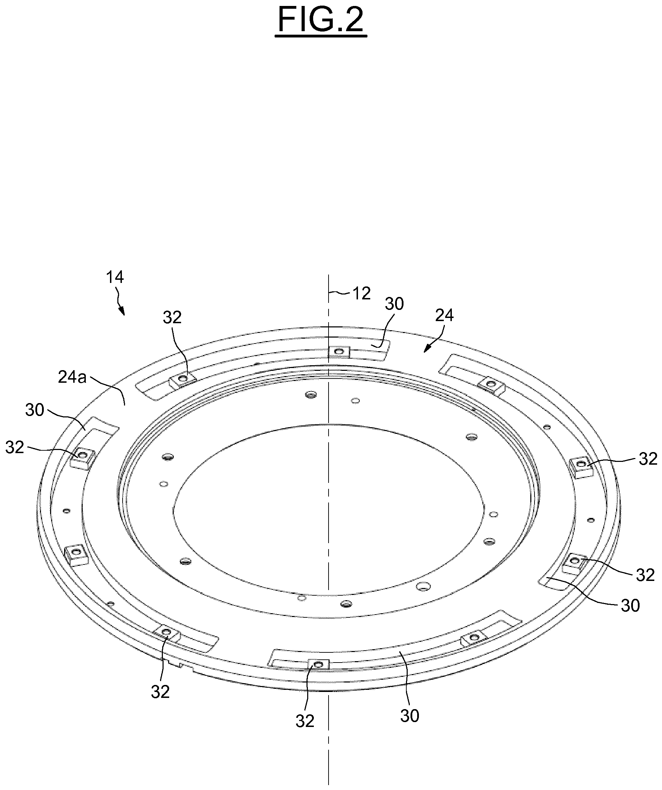

Comme illustré à la figure 2, une pluralité de rainures 30 est formée sur la face de moulage 24a du corps 24 de la coquille pour le montage des inserts. Les rainures 30 s'étendent axialement dans l'épaisseur du corps 24. Le fond de chaque rainure 30 est décalé axialement vers l'extérieur par rapport à la face de moulage 24a du corps. Les rainures 30 sont non traversantes. Chaque rainure 30 est ouverte et orientée axialement vers l'intérieur du côté de l'empreinte du moule. Les rainures 30 sont espacées dans le sens circonférentiel les unes par rapport aux autres, ici de manière régulière. Dans l'exemple de réalisation illustré, les rainures 30 sont au nombre de quatre et sont agencées en groupes de deux rainures, les rainures d'un groupe étant de longueur identique entre elles et différente de la longueur des rainures de l'autre groupe. Bien entendu, il est possible de prévoir un nombre et/ou un agencement différent des rainures 30.

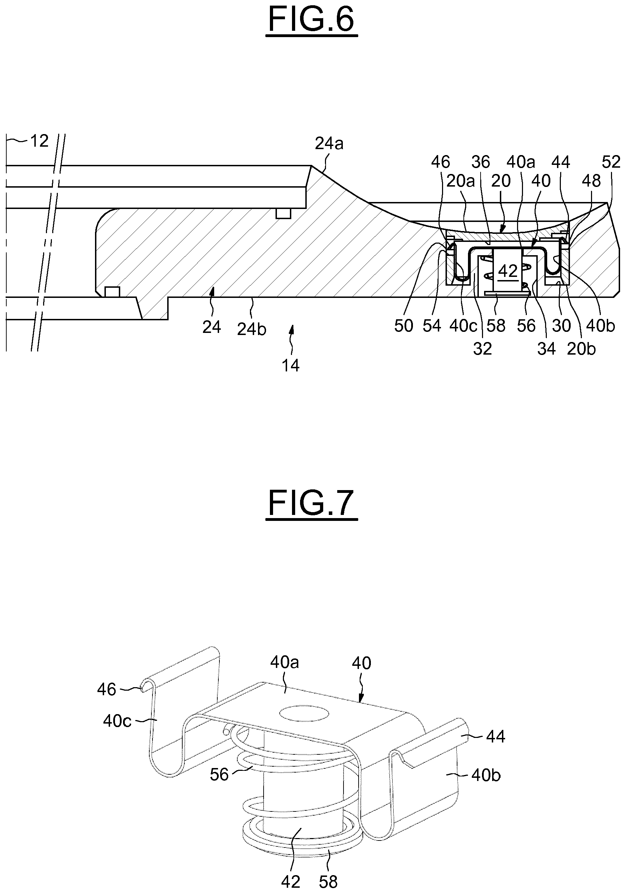

Le corps 24 de la coquille comprend également une pluralité de bossages 32 formés sur le fond de chaque rainure 30. Chaque bossage 32 s'étend axialement à partir du fond de la rainure associée en direction de la face de moulage 24a en restant axialement à distance de celle-ci. Chaque bossage 32 délimite un logement 34 (figure 6) débouchant sur la face d'appui 24b du corps. Chaque logement 34 est ouvert et orienté axialement vers l'extérieur du côté opposé à l'empreinte du moule. Comme cela sera décrit plus en détail par la suite, sur chaque bossage 32 est monté un moyen pour assurer une fixation amovible de l'insert 20 associé à la rainure 30.

Chaque insert 20 est logé à l'intérieur d'une des rainures 30 de la coquille. Chaque insert 20 comprend une face de moulage 20a interne, une face d'appui 20b opposée dans le sens axial, et deux bords longitudinaux 20 intérieur et 20d extérieur délimitant lesdites faces dans le sens radial. Chaque insert 20 comprend également deux bords d'extrémité latéraux délimitant dans le sens circonférentiel les faces de moulage 20a et d'appui 20b.

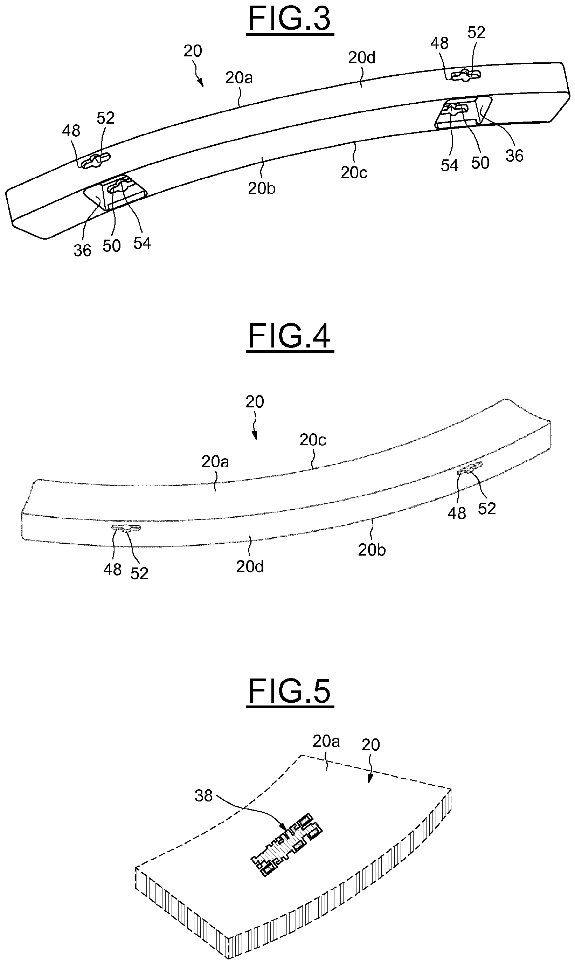

Chaque insert 20 comprend une pluralité d'évidements 36 (figure 3) formés sur la face d'appui 20b à l'intérieur de chacun desquels s'étend un des bossages 32 du corps. Les évidements 36 s'étendent axialement dans l'épaisseur de l'insert. Les évidements 36 sont non traversants.

La face de moulage 20a de chaque insert comprend des moyens de marquage permettant de mouler un motif sur le flanc latéral associé du pneumatique. Comme cela est visible à la figure 5, les moyens de marquage sont dans cet exemple destinés à mouler sur le flanc latéral du pneumatique un symbole matriciel codé 38 faisant contraste avec ce flanc. On rappelle qu'un symbole matriciel codé est un code où les données sont codées en deux dimensions, les données étant décodables par un imageur d'une machine, par exemple un téléphone portable. De manière connue en soi, le symbole matriciel codé 38 comprend une pluralité de cavités et de protubérances qui sont adaptées pour mouler des parties sombres et des parties claires du symbole matriciel 38.

Alternativement, il est possible de prévoir sur la face de moulage 20a de chaque insert 20 d'autres types de moyens de marquage permettant de mouler des informations techniques, légales ou distinctives de la marque du pneumatique pouvant être lues directement par les consommateurs.

En se référant maintenant à la figure 6, on note que la face de moulage 20a de chaque insert prolonge localement la face de moulage 24a du corps de la coquille de manière à épouser la forme de ce corps. La face d'appui 20b de chaque insert vient en appui contre le fond de la rainure 30 associée du corps de la coquille.

Comme indiqué précédemment, la coquille 14 comprend des moyens pour assurer une fixation amovible de chaque insert 20 sur le corps 24. A chaque insert 20 est associée une pluralité de moyens de fixation identiques. Les moyens de fixation étant identiques entre eux, on décrira par la suite uniquement l'un d'entre eux.

Chaque moyen de fixation comprend un organe de retenue 40 monté dans la rainure 30 et venant s'accrocher sur l'insert 20 associé, et une tige 42 de support de l'organe de retenue montée coulissante relativement au corps 24 de la coquille. Dans cet exemple de réalisation, l'organe de retenue 40 est monté sur le corps 24 en étant mobile par l'intermédiaire de la tige 42.

L'organe de retenue 40 est avantageusement obtenu en une seule pièce, par exemple par découpe d'un flanc de tôle ou encore par moulage d'une matière synthétique. Comme illustré plus visiblement à la figure 7, l'organe de retenue 40 comprend une embase 40a de montage sur laquelle est fixée la tige 42, et deux pattes 40b, 40c d'encliquetage s'étendant à partir de ladite embase. Les pattes 40b, 40c s'étendent à partir de bords opposés de l'embase 40a. L'embase 40a est montée axialement en appui contre le bossage 32 associé.

Chaque patte 40b, 40c de l'organe de retenue comprend une première partie axiale qui s'étend en direction du fond 30 de la rainure (figure 6) qui est prolongée par une deuxième partie qui est repliée de sorte à s'étendre axialement du côté opposé en direction de l'insert tout en restant radialement à distance de la première partie. Chaque patte 40b, 40c est déformable élastiquement dans le sens radial.

Chaque patte 40b, 40c est pourvue à son extrémité libre d'un crochet 44, 46 s'étendant vers l'extérieur pour venir s'accrocher sur l'insert 20 associé. Chaque crochet 44, 46 s'étend à l'intérieur d'une rainure 48, 50 radiale (figure 6) qui est formée sur un des bords longitudinaux de l'insert et qui débouche dans un des évidements 36. Comme cela est illustré plus visiblement à la figure 3, la rainure 48 s'étend à partir du bord longitudinal 20d de l'insert tandis que la rainure 50 s'étend à partir du bord longitudinal 20c opposé. Les rainures 48, 50 de forme identique sont en partie en regard. Dans l'exemple de réalisation illustré, les rainures 48, 50 ont une forme oblongue.

Une ouverture 52, 54 radiale est également formée à partir du bord longitudinal 20d, 20c de l'insert et débouche dans l'évidement 36. Chaque ouverture 52, 54 débouche en regard de la patte 40b, 40c de l'organe de retenue (figure 6). Dans l'exemple de réalisation illustré, chaque ouverture 52, 54 est réalisée sous la forme d'un trou qui est centré sur la rainure 48, 50 et qui s'étend le long des flancs de celle-ci. Les ouvertures 52, 54 de forme identique sont en partie en regard. Comme cela sera décrit plus en détail par la suite, les ouvertures 52, 54 sont prévues pour permettre d'accéder aux pattes 40b, 40c de l'organe de retenue depuis l'extérieur de l'insert 20.

En se référant de nouveau à la figure 6, chaque crochet 44, 46 vient en appui axialement contre le fond de la rainure 48, 50 associée. Les crochets 44, 46 forment des moyens d'encliquetage coopérant par contact avec le fond de la rainure 48, 50 pour assurer la retenue axiale de l'insert 20 sur l'organe de retenue. Hormis dans la zone des crochets 44 et 46, l'organe de retenue 40 est disposé dans la rainure 30 en étant logé entre le bossage 32 du corps et l'évidement 36 de l'insert.

La tige 42 supporte l'organe de retenue 40. L'extrémité supérieure de la tige est fixée sur l'embase 40a de l'organe de retenue. La tige 42 de support est montée à l'intérieur du logement 34 délimité par le bossage 32 associé et s'étend à travers l'épaisseur du bossage de sorte que l'organe de retenue 40 soit disposé dans la rainure 30. Le bossage 32 forme un moyen de guidage de la tige 42.

Dans l'exemple de réalisation illustré, chaque moyen de fixation comprend encore un ressort 56 de rappel monté dans le logement 34 autour de la tige 42 de support et interposé entre une tête 58 de ladite tige et le bossage 32. La spire d'extrémité inférieure du ressort vient en appui contre la tête 58 tandis que la spire d'extrémité supérieure vient en appui contre le bossage 32. Le ressort 56 exerce un effort permanent axial qui tend à plaquer l'organe de retenue 40 contre le bossage 32 du corps. Ceci favorise le maintien de l'insert 20 dans sa position de moulage dans laquelle la face de moulage 20a dudit insert prolonge localement la face de moulage 24a du corps de la coquille.

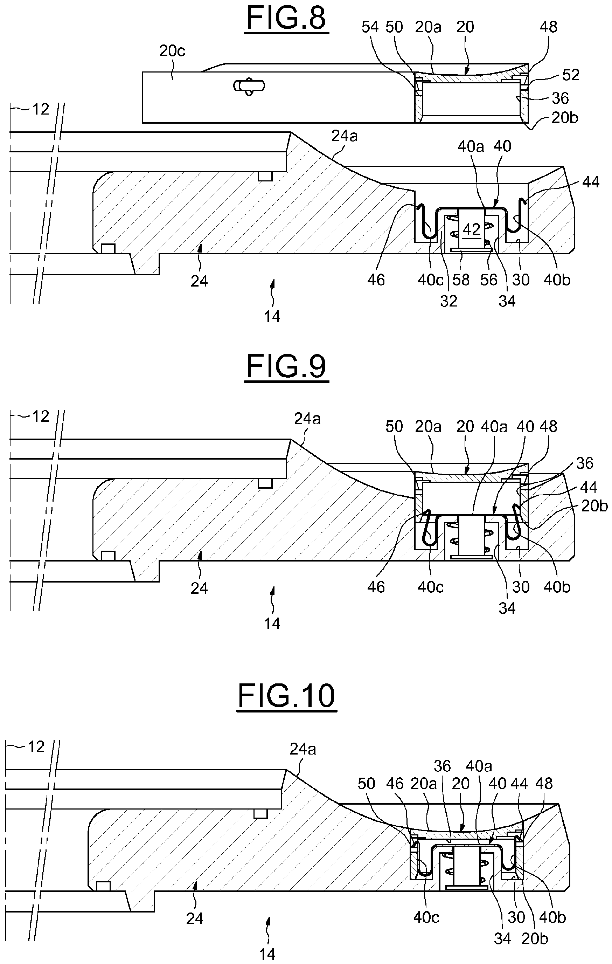

Le montage de chaque insert 20 à l'intérieur de la rainure 30 du corps peut être effectué manuellement par simple poussée axiale. Initialement, l'insert 20 est rapproché du corps 24 de la coquille jusqu'à être introduit à l'intérieur de la rainure 30 associée du corps comme cela est illustré aux figures 8 et 9.

Lors de cette introduction de l'insert 20, les crochets 44, 46 de l'organe de retenue viennent en contact contre la face d'appui 20b de l'insert, ce qui provoque une déformation des pattes 40b, 40c de l'organe de retenue radialement vers l'intérieur du logement 36. De sorte à favoriser cette déformation des pattes 40b, 40c sous l'effet du contact axial avec l'insert, des rampes inclinées (non référencées) sont ménagées sur la face d'appui 20b dans la zone de raccordement avec l'évidement 36.

L'insert 20 est poussé axialement à l'intérieur de la rainure 30 jusqu'à venir en appui contre le fond de celle-ci. Dans cette position, illustrée à la figure 10, chaque patte 40b, 40c peut reprendre par élasticité sa forme initiale à l'intérieur de la rainure 48, 50 associée de l'insert étant donné que le crochet 44, 46 associé ne vient plus radialement en appui contre un des bords du logement 36. Chaque crochet 44, 46 interfère dans le sens axial avec le fond de la rainure 48, 50 associée et assure la solidarisation de l'insert 20 sur l'organe de retenue 40.

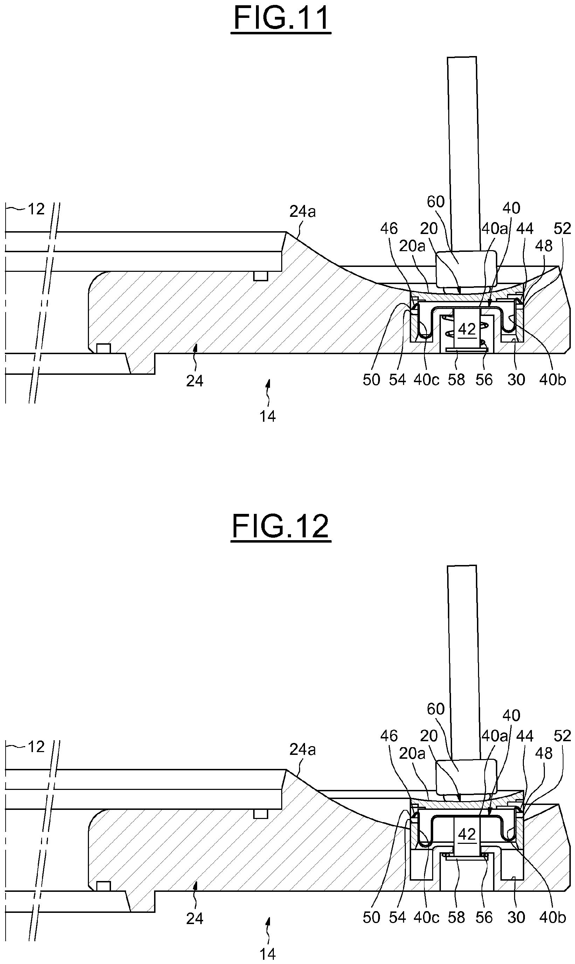

Pour procéder au démontage de l'insert 20, on procède de la manière suivante. Dans une première étape illustrée à la figure 11, un aimant 60 est appliqué contre la face de moulage 20a de l'insert lorsque celui-ci est dans sa position de moulage. L'insert 20 est réalisé dans un matériau magnétique, par exemple en acier.

Ensuite, dans une deuxième étape, à partir de cette position de moulage, un effort de traction axial est exercé via l'aimant 60 sur l'insert 20 de sorte à l'extraire au moins en partie hors de la rainure 30 du corps. L'insert 20 est déplacé de sa position de moulage jusqu'à atteindre une position de démontage qui est illustrée à la figure 12.

Lors du déplacement de l'insert 20 de la position de moulage vers la position de démontage, les crochets 44, 46 restent en prise avec les rainures 48, 50 de l'insert. L'organe de retenue 40 reste solidaire de l'insert 20. Le déplacement de l'insert 20 et de l'organe de retenue provoque le coulissement axial de la tige 42 de support qui est guidée par le bossage 32 et la compression axiale du ressort 56 entre la tête 58 de la tige et le bossage. La position de démontage de l'insert 20 correspond à la position dans laquelle il s'étend en partie en saillie par rapport à la face de moulage 24a du corps de la coquille et dans laquelle les ouvertures 52, 54 de l'insert sont accessibles depuis l'extérieur, i.e. laissées libres ou dégagées par le corps 24.

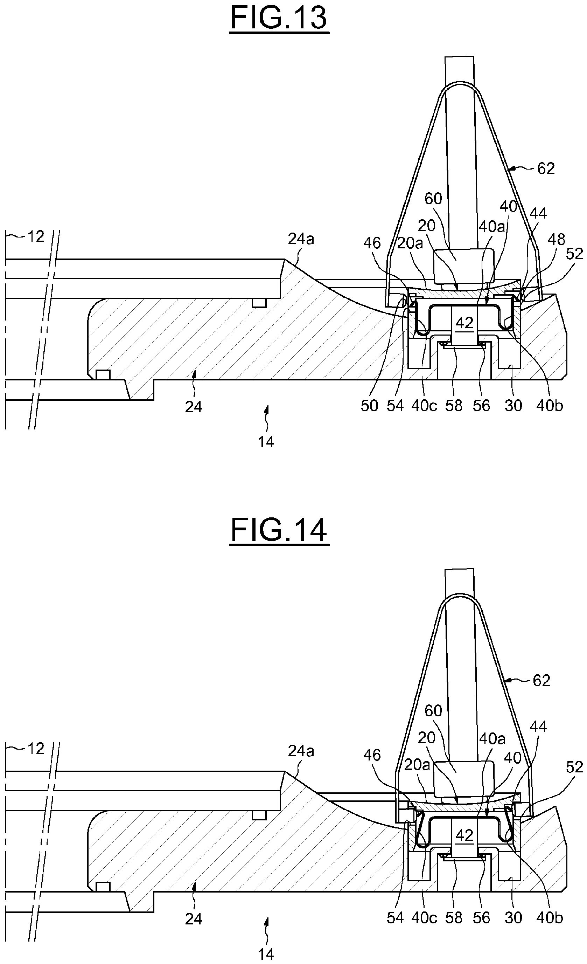

Puis, dans une troisième étape, dans cette position de démontage de l'insert, on utilise un outil de désencliquetage qui est ici réalisé sous la forme d'une pince 62 équipée à chaque extrémité d'un téton comme cela est illustré à la figure 13. Comme représenté à la figure 14, chaque téton de la pince 62 est engagé dans l'une des ouvertures 52, 54 de l'insert pour venir appuyer contre les crochets 44, 46 et déformer vers l'intérieur les pattes 40b, 40c de l'organe de retenue. Ainsi, les crochets 44, 46 de l'organe de retenue ne sont plus en prise avec les rainures 48, 50 de l'insert.

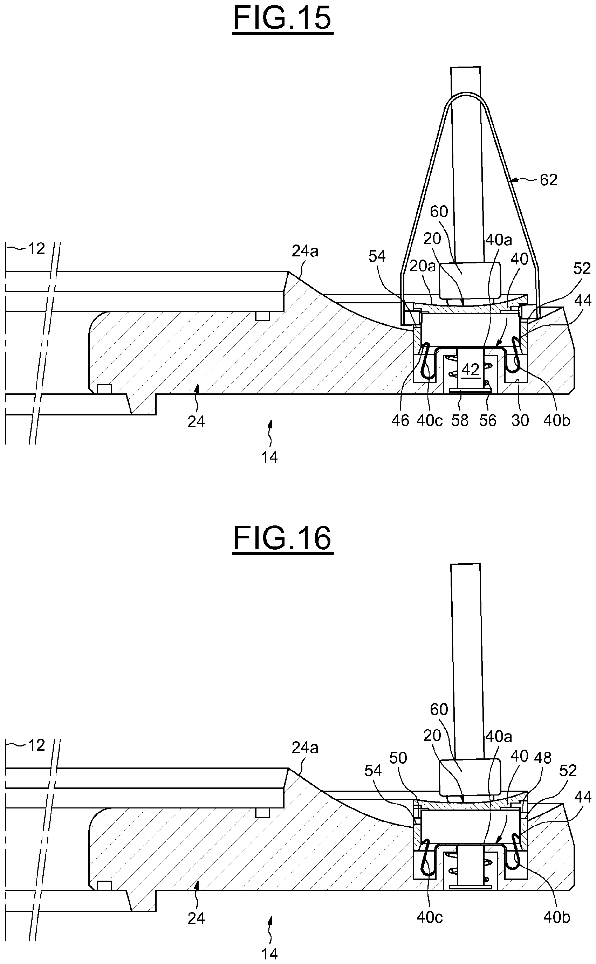

Sous l'effet de l'effort exercé par le ressort 56, l'organe de retenue 40 qui n'est plus solidaire de l'insert 20 est ramené automatiquement dans sa position initiale en appui contre le bossage 32 comme cela est illustré à la figure 15.

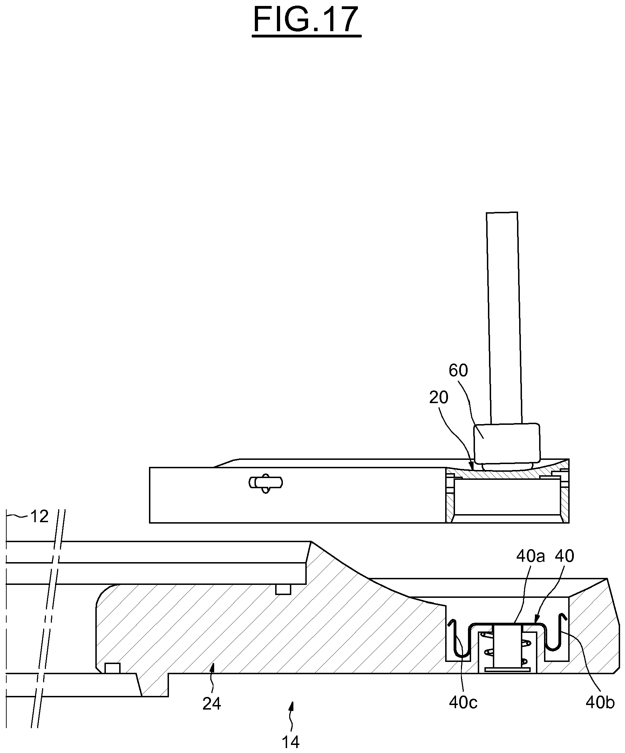

Enfin, lors d'une quatrième et dernière étape, la pince 62 est retirée des ouvertures 52, 54 de l'insert et l'insert 20 est extrait hors du corps 24 de la coquille comme cela est illustré aux figures 16 et 17.

Le démontage de l'insert 20 du corps 24 de la coquille est ainsi réalisé de manière particulièrement simple en un nombre limité d'opérations en accédant à cet insert directement par le profil moulant de la coquille sans démontage du moule.

L'invention a été illustrée sur la base d'une coquille équipée d'inserts présentant une géométrie particulière. On ne sort pas du cadre de la présente invention lorsque les inserts présentent une géométrie différente. Dans l'exemple de réalisation illustré, la fixation de manière amovible des inserts est réalisée sur les coquilles du moule. Alternativement ou en combinaison, il est également envisageable de prévoir une telle fixation d'inserts sur les secteurs du moule permettant le moulage de la bande de roulement.

## Revendications

1. Elément de moule pour moule de pneumatique du type comprenant une bande de roulement et deux flancs latéraux, l'élément de moule comprenant un corps (24) pourvu d'une face de moulage (24a) apte à mouler toute ou partie d'un des flancs latéraux ou de la bande de roulement du pneumatique, au moins une rainure (30) formée sur la face de moulage, au moins un insert (20) logé dans ladite rainure, et au moins un moyen de fixation apte à fixer de manière amovible ledit insert au corps, ledit insert étant pourvu d'une face de moulage (20a) interne comprenant des moyens de marquage aptes à mouler un motif sur le pneumatique, d'une face d'appui (20c) externe et de bords longitudinaux (20c, 20d) reliant lesdites faces, **caractérisé en ce que** :
- ledit moyen de fixation comprend un organe de retenue (40) qui est monté sur le corps (24) et logé au moins en partie à l'intérieur d'un évidement (36) formé sur la face d'appui (20b) dudit insert,
- l'organe de retenue (40) comprenant des pattes d'encliquetage (40b, 40c) déformables élastiquement et coopérant avec ledit insert pour assurer la fixation dudit insert sur l'organe de retenue,
- des ouvertures (52, 54) d'accès étant formées sur les bords longitudinaux (20c, 20d) dudit insert et débouchant dans l'évidement (36) en regard des pattes d'encliquetage de l'organe de retenue,
- l'organe de retenue (40) étant monté mobile relativement au corps (24) entre une position de moulage dans laquelle la face de moulage (20a) dudit insert prolonge localement la face de moulage (24a) du corps, et une position de démontage dans laquelle ledit insert s'étend au moins en partie en saillie par rapport à ladite face de moulage du corps pour laisser dégager les ouvertures (52, 54) d'accès.

2. Elément de moule selon la revendication 1, dans lequel les pattes d'encliquetage (40b, 40c) de l'organe de retenue coopèrent avec des rainures (48, 50) qui sont formées sur les bords longitudinaux (20c, 20d) dudit insert et qui débouchent dans l'évidement (36).

3. Elément de moule selon la revendication 2, dans lequel les ouvertures (52, 54) d'accès s'étendent en partie sur les flancs des rainures (48, 50).

4. Elément de moule selon la revendication 2, dans lequel les rainures (48, 50) forment les ouvertures d'accès dudit insert.

5. Elément de moule selon l'une quelconque des revendications précédentes, dans lequel les pattes d'encliquetage (40b, 40c) de l'organe de retenue comprennent chacune un crochet (44, 46) coopérant par contact avec ledit insert.

6. Elément de moule selon l'une quelconque des revendications précédentes, dans lequel l'organe de retenue (40) comprend une embase (40a) pour le montage sur un support mobile par rapport au corps (24), les pattes d'encliquetage (40b, 40c) étant supportées par l'embase.

7. Elément de moule selon la revendication 6, dans lequel l'organe de retenue (40) est réalisé en une seule pièce.

8. Elément de moule selon l'une quelconque des revendications précédentes, dans lequel ledit moyen de fixation comprend en outre un support (42) de l'organe de retenue monté coulissant relativement au corps (24).

9. Elément de moule selon la revendication 8, dans lequel le support (42) s'étend à l'intérieur d'un logement (34) qui est délimité par un bossage (32) formé sur le fond de la rainure et qui débouche sur une face d'appui (24b) du corps opposée à la face de moulage (24a).

10. Elément de moule selon la revendication 9, dans lequel l'organe de retenue (40) vient en appui contre le bossage (32) dans la position de moulage.

11. Elément de moule selon l'une quelconque des revendications précédentes, dans lequel ledit moyen de fixation comprend en outre un organe de rappel élastique (56) de l'organe de retenue vers la position de moulage.

12. Elément de moule selon la revendication 11 dépendante de l'une des revendications 8 à 10, dans lequel l'organe de rappel élastique (56) est monté autour du support (42).

13. Elément de moule selon l'une quelconque des revendications précédentes, dans lequel les moyens de marquage dudit insert sont aptes à mouler un motif faisant contraste avec le reste du pneumatique.

14. Elément de moule selon la revendication 13, dans lequel les moyens de marquage sont aptes à mouler un motif comprenant au moins un symbole matriciel codé.

15. Moule pour pneumatique comprenant une couronne (18) destinée à assurer le moulage de la bande de roulement du pneumatique, et des coquilles (14, 16) destinées à assurer chacune le moulage d'un des flancs latéraux du pneumatique, au moins l'une de la couronne et des coquilles comprenant un élément de moule selon l'une quelconque des revendications précédentes.

16. Procédé de démontage de l'insert d'un élément de moule selon l'une quelconque des revendications 1 à 14, le procédé comprenant les étapes suivantes :
- déplacer l'insert de la position de moulage à la position de démontage dans laquelle les ouvertures d'accès dudit insert sont dégagées, et
- introduire un outil à l'intérieur des ouvertures d'accès et appuyer avec cet outil sur les pattes d'encliquetage de l'organe de retenue pour les déformer vers l'intérieur de l'insert de sorte à désolidariser l'insert de l'organe de retenue.

## Patentansprüche

1. Formelement für eine Form eines Luftreifens von der Art, die einen Laufstreifen und zwei Seitenflanken enthält, wobei das Formelement einen Körper (24), der mit einer Formgebungsseite (24a) versehen ist, die alles oder einen Teil einer der Seitenflanken oder des Laufstreifen des Luftstreifens formen kann, mindestens eine auf der Formgebungsseite geformte Rille (30), mindestens einen in der Rille untergebrachten Einsatz (20), und mindestens eine Befestigungseinrichtung enthält, die den Einsatz lösbar am Körper befestigen kann, wobei der Einsatz mit einer inneren Formgebungsseite (20a), die Markierungseinrichtungen enthält, die ein Muster auf dem Luftreifen formen können, einer äußeren Auflageseite (20c) und mit Längsrändern (20c, 20d) versehen ist, die die Seiten verbinden, **dadurch gekennzeichnet, dass**:
- die Befestigungseinrichtung ein Halteorgan (40) enthält, das auf den Körper (24) montiert und zumindest zum Teil innerhalb einer Aussparung (36) untergebracht ist, die auf der Auflageseite (20b) des Einsatzes gebildet ist,
- das Halteorgan (40) Einrastlaschen (40b, 40c) enthält, die elastisch verformbar sind und mit dem Einsatz zusammenwirken, um die Befestigung des Einsatzes auf dem Halteorgan zu gewährleisten,
- Zugangsöffnungen (52, 54) auf den Längsrändern (20c, 20d) des Einsatzes gebildet sind und in der Aussparung (36) gegenüber den Einrastlaschen des Halteorgans münden,
- das Halteorgan (40) bezüglich des Körpers (24) zwischen einer Formgebungsstellung, in der die Formgebungsseite (20a) des Einsatzes die Formgebungsseite (24a) des Körpers lokal verlängert, und einer Ausbaustellung beweglich montiert ist, in der der Einsatz sich zumindest zum Teil bezüglich der Formgebungsseite des Körpers vorstehend erstreckt, um die Zugangsöffnungen (52, 54) freilegen zu lassen.

2. Formelement nach Anspruch 1, wobei die Einrastlaschen (40b, 40c) des Halteorgans mit Rillen (48, 50) zusammenwirken, die auf den Längsrändern (20c, 20d) des Einsatzes gebildet sind und in die Aussparung (36) münden.

3. Formelement nach Anspruch 2, wobei die Zugangsöffnungen (52, 54) sich zum Teil auf den Flanken der Rillen (48, 50) erstrecken.

4. Formelement nach Anspruch 2, wobei die Rillen (48, 50) die Zugangsöffnungen des Einsatzes bilden.

5. Formelement nach einem der vorhergehenden Ansprüche, wobei die Einrastlaschen (40b, 40c) des Halteorgans je einen Haken (44, 46) enthalten, der durch Kontakt mit dem Einsatz zusammenwirkt.

6. Formelement nach einem der vorhergehenden Ansprüche, wobei das Halteorgan (40) eine Grundplatte (40a) für die Montage auf einen bezüglich des Körpers (24) beweglichen Träger enthält, wobei die Einrastlaschen (40b, 40c) von der Grundplatte getragen werden.

7. Formelement nach Anspruch 6, wobei das Halteorgan (40) aus einem Stück hergestellt ist.

8. Formelement nach einem der vorhergehenden Ansprüche, wobei die Befestigungseinrichtung außerdem einen Träger (42) des Halteorgans enthält, der bezüglich des Körpers (24) gleitend montiert ist.

9. Formelement nach Anspruch 8, wobei der Träger (42) sich im Inneren einer Aufnahme (34) erstreckt, die von einer auf dem Boden der Rille gebildeten Wölbung (32) begrenzt wird und an einer Auflageseite (24b) des Körpers entgegengesetzt zur Formgebungsseite (24a) mündet.

10. Formelement nach Anspruch 9, wobei das Halteorgan (40) in der Formgebungsstellung gegen die Wölbung (32) in Auflage kommt.

11. Formelement nach einem der vorhergehenden Ansprüche, wobei die Befestigungseinrichtung außerdem ein elastisches Rückstellorgan (56) des Halteorgans in die Formgebungsstellung enthält.

12. Formelement nach Anspruch 11 abhängig von einem der Ansprüche 8 bis 10, wobei das elastische Rückstellorgan (56) um den Träger (42) herum montiert ist.

13. Formelement nach einem der vorhergehenden Ansprüche, wobei die Markierungseinrichtungen des Einsatzes ein Muster formen können, das einen Kontrast zum Rest des Luftreifens bildet.

14. Formelement nach Anspruch 13, wobei die Markierungseinrichtungen ein Muster formen können, das zumindest ein codiertes Matrixsymbol enthält.

15. Form für einen Luftreifen, die einen Kranz (18), der dazu bestimmt ist, das Formen des Laufstreifens des Luftreifens zu gewährleisten, und Schalen (14, 16) enthält, die dazu bestimmt sind, je das Formen einer der Seitenflanken des Luftreifens zu gewährleisten, wobei mindestens einer vom Kranz und den Schalen ein Formelement nach einem der vorhergehenden Ansprüche enthält.

16. Verfahren zum Ausbau des Einsatzes eines Formelements nach einem der Ansprüche 1 bis 14, wobei das Verfahren die folgenden Schritte enthält:
- Verschieben des Einsatzes von der Formgebungsstellung in die Ausbaustellung, in der die Zugangsöffnungen des Einsatzes freigelegt sind, und
- Einführen eines Werkzeugs ins Innere der Zugangsöffnungen und Drücken mit diesem Werkzeug auf die Einrastlaschen des Halteorgans, um sie zum Inneren des Einsatzes zu verformen, um den Einsatz vom Halteorgan zu lösen.

## Claims

1. Mould element for a tyre mould of the type comprising a tread and two side walls, the mould element comprising a body (24) provided with a moulding face (24a) capable of moulding all or part of one of the side walls or of the tread of the tyre, at least one groove (30) formed on the moulding face, at least one insert (20) housed in said groove, and at least one fixing means capable of removably fixing said insert to the body, said insert being provided with an inner moulding face (20a) comprising marking means capable of moulding a pattern on the tyre, an outer bearing face (20c) and longitudinal edges (20c, 20d) linking said faces, **characterized in that**:
- said fixing means comprises a retaining member (40) which is mounted on the body (24) and housed at least partly inside a void (36) formed on the bearing face (20b) of said insert,
- the retaining member (40) comprising elastically deformable snap-fitting tabs (40b, 40c) cooperating with said insert to ensure the fixing of said insert to the retaining member,
- access openings (52, 54) being formed on the longitudinal edges (20c, 20d) of said insert and emerging in the void (36) facing the snap-fitting tabs of the retaining member,
- the retaining member (40) being mounted to be mobile relative to the body (24) between a moulding position in which the moulding face (20a) of said insert locally prolongs the moulding face (24a) of the body, and a dismantling position in which said insert extends at least partly protruding relative to said moulding face of the body to free the access openings (52, 54).

2. Mould element according to Claim 1, wherein the snap-fitting tabs (40b, 40c) of the retaining member cooperate with grooves (48, 50) which are formed on the longitudinal edges (20c, 20d) of said insert and which emerge in the void (36).

3. Mould element according to Claim 2, wherein the access openings (52, 54) extend partly on the flanks of the grooves (48, 50).

4. Mould element according to Claim 2, wherein the grooves (48, 50) form the access openings of said insert.

5. Mould element according to any one of the preceding claims, wherein the snap-fitting tabs (40b, 40c) of the retaining member each comprise a hook (44, 46) cooperating by contact with said insert.

6. Mould element according to any one of the preceding claims, wherein the retaining member (40) comprises a base (40a) for mounting on a mobile a support that is mobile relative to the body (24), the snap-fitting tabs (40b, 40c) being supported by the base.

7. Mould element according to Claim 6, wherein the retaining member (40) is produced in a single piece.

8. Mould element according to any one of the preceding claims, wherein said fixing means further comprises a support (42) of the retaining member mounted to slide relative to the body (24).

9. Mould element according to Claim 8, wherein the support (42) extends inside a recess (34) which is delimited by a boss (32) formed on the bottom of the groove and which emerges on a bearing face (24b) of the body opposite the moulding face (24a).

10. Mould element according to Claim 9, wherein the retaining member (40) comes to bear against the boss (32) in the moulding position.

11. Mould element according to any one of the preceding claims, wherein said fixing means further comprises an elastic return member (56) for returning the retaining member to the moulding position.

12. Mould element according to Claim 11, dependent on one of Claims 8 to 10, wherein the elastic return member (56) is mounted around the support (42).

13. Mould element according to any one of the preceding claims, wherein the marking means of said insert are capable of moulding a pattern forming a contrast with the rest of the tyre.

14. Mould element according to Claim 13, wherein the marking means are capable of moulding a pattern comprising at least one coded matrix symbol.

15. Mould for a tyre comprising a crown ring (18) intended to ensure the moulding of the tread of the tyre, and shells (14, 16) intended to each ensure the moulding of one of the side walls of the tyre, at least one of the crown ring and of the shells comprising a mould element according to any one of the preceding claims.

16. Method for dismantling the insert of a mould element according to any one of Claims 1 to 14, the method comprising the following steps:
- moving the insert from the moulding position to the dismantling position in which the access openings of said insert are freed, and
- introducing a tool into the access openings and pressing with this tool on the snap-fitting tabs of the retaining member to deform them towards the interior of the insert so as to separate the insert from the retaining member.
